# EUROPÄISCHE PATENTSCHRIFT

(11) **EP 2 241 458 B1**
(45) Veröffentlichungstag und Bekanntmachung des Hinweises auf die Patenterteilung: **12.10.2011**
(21) Anmeldenummer: 10159715.1
(22) Anmeldetag: 13.04.2010
(51) Int. Cl.: B60F 1/04, B61C 9/50, B61F 3/04

(54) **Schienenfahreinrichtung für ein Fahrzeug und zugehöriges Fahrzeug**
Device for running on rails and corresponding vehicle
Dispositif pour circuler sur rail et véhicule correspondant

(30) Priorität: 17.04.2009 EP 09005460
(43) Veröffentlichungstag der Anmeldung: 20.10.2010
(73) Patentinhaber: Windhoff Bahn- und Anlagentechnik GmbH, 48431 Rheine (DE)
(72) Erfinder: Schmidt, Otto, 75050 Gemmingen (DE)
(74) Vertreter: Habbel, Ludwig

(56) Entgegenhaltungen:
- EP-A- 0 523 814
- DE-A1- 19 844 024
- DE-A1-102006 044 964
- DE-U1-202008 008 246

## Beschreibung

Die Erfindung betrifft eine Schienenfahreinrichtung für ein Fahrzeug und ein korrespondierendes Fahrzeug, das mindestens eine solche Schienenfahreinrichtung umfasst, nach den Oberbegriffen der unabhängigen Patentansprüche.

Üblicherweise ist eine derartige Schienenfahreinrichtung für ein Zweiwegefahrzeug vorgesehen, das als Basisfahrzeug einen Lastkraftwagen aufweist. Die Schienenfahreinrichtung umfasst ein anhebbares und absenkbares Fahrwerk für die Montage an dem Basisfahrzeug zur Ausbildung eines wahlweise straßen- oder schienentauglichen Zweiwegefahrzeugs. In der abgesenkten Position des Fahrwerks stehen die Spurräder des Fahrwerks mit einer Schiene, z.B. einem Eisenbahngleis, im Eingriff und in einer angehobenen Position des Fahrwerks liegen die Fahrbahnräder des Zweiwegefahrzeugs auf einer Fahrbahn auf, wobei zwischen den Spurrädem and der Fahrbahnoberfläche ein Freiraum besteht. Häufig wird eine solche Schienenfahreinrichtung entweder mit einem Reibradantrieb oder mit einem hydrostatischen Antrieb angetrieben. Beim Reibradantrieb treiben Straßenräder des Lastkraftwagens nach dem Reibradprinzip Reibtrommeln an, die über einen Übertragungsmechanismus eine Antriebsleistung sowie eine Bremsleistung den Spurrädern der Schienenfahreinrichtung zuführen. Hierbei ist sowohl die Übertragung der Antriebsleistung als auch die Übertragung der Bremsleistung abhängig von der Haftung zwischen den Straßenrädern und den Reibtrommeln. Beim hydrostatischen Antrieb wird Hydrauliköl von einer Hydraulikpumpe über Hydraulikleitungen zu den an den Spurrädem sitzenden Hydraulikmotoren gepumpt. Trotz einer Verstellmöglichkeit von Hydraulikpumpe und Hydraulikmotoren in Bezug auf den Volumenstrom steigt die Fließgeschwindigkeit des Hydrauliköles in den Hydraulikleitungen mit zunehmender Fahrgeschwindigkeit überproportional an, wobei selbst bei Leerlauffahrt ein gewisser Ölfluss vorhanden ist. Dies führt reibungsbedingt zu einer Temperaturerhöhung des Hydrauliköles und einem damit verbundenen starken Wirkungsgradverlust sowie der Gefahr von Leckagen.

Aus der DE 198 44 024 A1 ist eine gattungsgemäße Schienenfahreinrichtung für ein Zweiwegefahrzeug mit einem anhebbaren und absenkbaren Fahrwerk bekannt. Das Fahrwerk umfasst zwei Radsätze mit Radsatzwellen und zwei in Radsatzlagem auf der Radsatzwelle gelagerten Rädern und einen Fahrwerkrahmen, an welchem die Radsatzwelle gelagert ist. Die Radsatzwellen können jeweils von einem Elektromotor angetrieben werden oder alternativ von elektrischen Einzelradantrieben. Üblicherweise ist bei Zweiwegefahrzeugen der verfügbare Bauraum sehr beschränkt, weswegen ein Einzelradantrieb relativ platzsparend ist. Soll eine Radsatzwelle mit Spurweitenverstellung vorgesehen werden, steht häufig kein ausreichender Bauraum zur Verfügung.

Aufgabe der Erfindung ist es, eine Schienenfahreinrichtung für ein Fahrzeug anzugeben, bei der trotz beschränktem Bauraum ein Antrieb der Radsatzwelle gleichzeitig mit einer einfachen und schnellen Verstellung mindestens einer Spurweite des Radsatzes der Schienenfahreinrichtung möglich ist.

Die Aufgabe wird erfindungsgemäß durch die Merkmale der unabhängigen Ansprüche gelöst. Günstige Ausgestaltungen und Vorteile der Erfindung ergeben sich aus den weiteren Ansprüchen und der Beschreibung.

Eine erfindungsgemäße Schienenfahreinrichtung zeichnet sich dadurch aus, dass zwischen einer Antriebseinheit und der Radsatzwelle eine Getriebeeinheit vorgesehen ist, bei der ein Antriebsrad zum Antreiben der Radsatzwelle auf einer drehbaren Welle angeordnet ist. Dies ermöglicht einen sehr kurzen Übertragungsweg des Kraftflusses von der Antriebseinheit zur Radsatzwelle. Die Getriebeeinheit kann dadurch sehr schmal und flach bauen. Insbesondere ist es hierdurch möglich, unter eng begrenzten Bauraumbedingungen einen leistungsfähigen Antrieb der Schienenfahreinrichtung auch bei innengelagerten Rädern zu realisieren. Innengelagerte Räder weisen ihr Radlager an ihrer Innenseite auf und sind daher gerade für Zweiwegefahrzeuge bevorzugt. Allerdings wird dadurch zwischen den Rädern der bereits knappe Bauraum weiter eingeschränkt. Durch die kompakte Bauweise kann die Schienenfahreinrichtung mit dem leistungsfähigen Antrieb in Kombination mit einer insbesondere mechanischen Spurweitenverstellung für die Radsatzwelle bereitgestellt werden. Günstigerweise kann der Radstand der Radsatzwelle zwischen Schmalspur und wenigstens einer weiteren, breiteren Spur verstellt werden. So ist durch die Kompaktheit des Getriebes ein Radstand mit innengelagerten Rädern entsprechend einer Schmalspur von z.B. 1000 mm (gemäß vorgegebenem Schienenabstand bei Schmalspur) in der Schienenahreinrichtung möglich.

Zweckmäßigerweise kann das Getriebe als Stirnradgetriebe ausgeführt sein. In vorteilhafter Weise ergibt sich hierdurch eine effiziente Kraftübertragung der Getriebeeinheit bei kleinem Bauraumbedarf. Insbesondere kann die Stirnradgetriebeeinheit so ausgelegt sein, dass eine oder mehrere parallele, vorzugsweise zwei, Antriebswellen in das Stirnradgetriebe eingreifen können. Auf diese Weise kann die Schienenfahreinrichtung mit einem oder zwei oder mehreren Antriebseinheiten angetrieben werden. Es kann ausgehend von einem Grunddesign ohne Umkonstruieren der Schienenfahreinrichtung die elektrische Antriebsleistung z.B. verdoppelt werden, wenn bei unterschiedlichen Fahrzeugen unterschiedliche Antriebsleistungen bereitgestellt werden sollen. Die Schienenfahreinrichtung kann universell für verschiedene Leistungstypen bereitgestellt werden. Durch ihren vorteilhaften modularen Aufbau kann die Schienenfahreinrichtung als kompakte und bauraumoptimierte Einheit bereitgestellt werden.

Gemäß einer vorteilhaften Ausgestaltung kann das Antriebsrad ein Zahnrad in Relativlagerung sein. Das Zahnrad ist dabei auf der drehbaren Welle gelagert, wobei das Zahnrad langsamer dreht als die Welle. Dies ermöglicht einen besonders kompakten Übertragungsweg des Antriebsmoments vom Antrieb auf die Radsatzwelle.

Gemäß einer vorteilhaften Ausgestaltung kann eine elektrische Antriebseinheit vorgesehen sein, die insbesondere einen Drehstromantrieb umfassen kann. Ein Drehstromantrieb weist ein besonders günstiges Verhältnis zwischen Gewicht, Größe und elektrischer Leistung auf.

Gemäß einer vorteilhaften Ausgestaltung kann eine Spurweitenverstelleinheit zur Verstellung mindestens einer Spurweite des Radsatzes vorgesehen sein, welche Radsatzlager mit zylindrischen oder konischen Sitzen zur Lagerung des Radsatzes umfasst. Bevorzugt können die Sitze auf Aufnahmeflanschen mit Sitzen und/oder auf Adaptern, die auf den Aufnahmeflanschen befestigbar sind, ausgebildet sein. Hierdurch ist in vorteilhafter Weise eine einfache und schnelle und damit baustellengerechte Verstellung mindestens einer Spurweite des Radsatzes der Schienenfahreinrichtung möglich. Die Demontage der Spurräder des Radsatzes kann auf einfache Weise mittels Abdrückschrauben erfolgen. Im Fall eines konischen Sitzes bewirkt ein kurzes Andrücken der Abdrückschrauben bereits ein Ablösen des Spurrades von seinem konischen Sitz, je nach der eingestellten Spurweite vom Adapter oder vom Aufnahmeflansch. Ebenso einfach kann der Adapter von seinem konischen Sitz von der jeweiligen Radsatzwelle gelöst werden.

Im Fall eines zylindrischen Sitzes ergeben sich Vorteile bei Fertigung und Montage, insbesondere eine besonders hohe Genauigkeit bei der Endlage der zu montierenden Teile.

Zum Einstellen der Spurweite auf z.B. Schmalspur wird das Spurrad auf den Sitz des Aufnahmeflanschs aufgesetzt und mit Befestigungsschrauben fixiert. Für andere Spurweiten wie z.B. Normalspur oder Breitspur kann z.B. ein Adapter vorgesehen sein, der lösbar auf einem zylindrischen oder konischen Sitz der Radsatzwelle befestigt wird und der einen zylindrischen oder konischen Sitz für das Spurrad entsprechend der gewünschten Spurbreite, z.B. Breitspur oder Normalspur, aufweist. Der Adapter weist z.B. einen Hohlzylinder mit einer der gewünschten Spurweite angepassten Länge auf, der über die Radsatzwelle bis zum Aufnahmeflansch geschoben wird und an dessen freiem Ende eine Adapter-Scheibe angeordnet ist, an dem das Spurrad angeschraubt werden kann, das auf den zylindrischen oder konischen Sitz des Adapters geschoben ist. Hierdurch kann eine eingestellte Spurweite der Schienenfahreinrichtung innerhalb kürzester Zeit auf eine gewünschte Spurweite mit einfachen Werkzeugen umgestellt werden. Die Anordnung ist robust und kann auch unter Baustellenbedingungen eingesetzt werden, die einen erhöhten Verschmutzungsgrad des Fahrwegs mit sich bringen.

Günstigerweise kann die Radsatzwelle entsprechend den Anforderungen der Eisenbahntechnik ausgebildet sein und insbesondere einer aktuellen Norm der Eisenbahn DIN EN 13104 entsprechend. Die Norm gilt für außengelagerte Radsatzlager, kann jedoch für innengelagerte Radsatzlager angepasst werden, so dass die Radsatzwellen solche Spezifikationen leicht erfüllen können.

Der Einsatz einer elektrischen Antriebseinheit für die Radsatzwelle ermöglicht eine nahezu verschleißfreie Leistungsübertragung von der elektrischen Antriebseinheit auf die Radsatzwelle, wodurch sich ein hoher Gesamtwirkungsgrad ergibt. Zudem ist eine bestmögliche Reibwertausnutzung durch eine elektronische Antriebsregelung erzielbar. Leckagebehaftete Hydraulikleitungen können entfallen, wodurch sich ein nennenswerter Vorteil in Bezug auf den Umweltschutz ergibt. Insbesondere ist keine großbauende Kühleinrichtung für eine Hydrostatikanlage notwendig, wodurch sich in vorteilhafter Weise eine Energieersparnis ergibt. Günstigerweise kann eine Kühlung des elektrischen Antriebs in die Kühlung der Antriebseinheit des Fahrzeugs integriert sein, oder ein geeignetes Kühlaggregat für die elektrische Antriebseinheit vorgesehen sein. In vorteilhafter Weise kann im Bedarfsfall ein elektronisch geregelter Gleit- und Schleuderschutz ermöglicht werden. Ferner ergibt sich die Möglichkeit des Einsatzes weiterer elektrischer Verbraucher im Kraftstromnetz. Weiter ergibt sich eine wartungsarme Ausgestaltung der Schienenfahreinrichtung und dadurch auch niedrige Instandhaltungskosten.

Vorteilhaft kann, im Falle eines konischen statt zylindrischen Sitzes, der Konus der Sitze auf den Adaptern, den Radsatzwellen und auf dem Aufnahmeflansch einen halben Öffnungswinkel im Bereich von 2° bis 5° aufweisen, vorzugsweise etwa 3°. Die im Betrieb der Schienenfahreinrichtung durch diesen Winkel entstehenden relativ geringen axialen Kräfte können in vorteilhafter Weise von den bestehenden Befestigungselementen aufgenommen werden. Gleichzeitig erlaubt die Abschrägung des konischen Sitzes ein ausreichend einfaches Entfernen des Spurrads vom und ein ebenso einfaches Aufschieben des Spurrads auf den konischen Sitz.

Zweckmäßigerweise können die Aufnahmeflansche über einen Kegelpressverband fest mit der mindestens einen Radsatzwelle verbunden sein. Vorzugsweise kann der Kegelpressverband im kalten Zustand der Bauteile durch Aufweiten der Nabe der Aufnahmeflansche bevorzugt mit Hilfe von Glycerin oder einem anderen üblichen Montageöl hergestellt werden. In vorteilhafter Weise ist hierdurch eine sichere Verbindung der Aufnahmeflansche mit den Radsatzwellen ermöglicht.

Günstigerweise kann die Spurweitenverstelleinheit zumindest eine Umstellung der Spurweite des Radsatzes zwischen Schmalspur, Normalspur und Breitspur durch diskret auf der Radsatzwelle angeordnete zylindrische oder konische Sitze ermöglichen.

In vorteilhafter Weise kann der Fahrwerkrahmen einen Querträger und zwei Längslenker umfassen, über welche die mindestens eine Radsatzwelle mit dem Querträger verbunden ist. Hierdurch ergibt sich auf konstruktiv einfache Weise eine stabile Ausführung des Fahrwerks.

In einer weiteren Ausgestaltung der erfindungsgemäßen Schienenfahreinrichtung kann ein Gehäuse der Getriebeeinheit als Längslenker des Fahrwerks ausgebildet sein. Vorzugsweise kann hierbei das Getriebegehäuse starr zwischen dem Querträger und der Radsatzwelle eingespannt sein und hierdurch gleichzeitig als Längslenker fungieren, der im Betrieb der Schienenfahreinrichtung auftretende Kräfte an den Querträger weitergibt. Parallel zur Längserstreckung des Getriebegehäuses ist ein stabförmiger Längslenker vorgesehen, der an seinem von der Radsatzwelle entfernten Ende ein Drehgelenk aufweist, um den eine begrenzte Schwenkbewegung um eine horizontale, zur Radsatzwelle parallele Achse möglich ist. Vorteilhaft ist am korrespondierenden von der Radsatzwelle abgewandten Ende des Getriebegehäuses ebenfalls ein Drehgelenk vorgesehen, das eine Schwenkbewegung um dieselbe Achse wie das Drehgelenk des Lenkerstabs erlaubt. An einem oder beiden Drehgelenken können bevorzugt Gummibuchsen angeordnet sein, die dämpfende und elastische Eigenschaften aufweisen. Damit ergibt sich eine fahrdynamisch günstige Beweglichkeit der Schienenfahreinrichtung in vertikaler Richtung.

Eine vorteilhafte Weiterbildung der Erfindung sieht vor, dass die elektrische Antriebseinheit mit einem Generator in Verbindung stehen kann, der von einer Brennkraftmaschine des Fahrzeugs gespeist wird. Vorzugsweise wird über einen für diesen Einsatzfall geeigneten Frequenzumrichter ein Fahrstrom mit variabler Spannung und Frequenz erzeugt und der elektrischen Antriebseinheit bedarfsgerecht zugeführt. Insbesondere besteht die Möglichkeit bei Mitführen mindestens eines elektrischen Energiespeichers auf den Betrieb der Brennkraftmaschine beispielsweise bei Arbeiten im Tunnel verzichten zu können. Selbstverständlich ist auch ein Einsatz bei einem Hybridfahrzeug möglich, bei dem wenigstens zwei Energiequellen zum Antreiben des Fahrzeugs vorgesehen sind, z.B. eine Brennkraftmaschine und ein elektrischer Antrieb. Alternativ oder zusätzlich kann eine Stromversorgung der elektrischen Antriebseinheit durch einen oder mehrere mitgeführte elektrische Energiespeicher und/oder durch einen oder mehrere Stromabnehmer aus einem Versorgungsnetz und/oder durch eine induktive Stromversorgung versorgbar sein. So kann etwa ein Stromabnehmer auf dem Fahrzeugdach oder z.B. seitlich am Drehgestell angeordnet sein und elektrische Energie aus einem vorhandenen Versorgungsnetz zuführen kann, etwa einer elektrischen Oberleitung, einer Stromschiene im Fahrbahnbereich oder dergleichen.

Eine weitere vorteilhafte Weiterbildung der Erfindung sieht vor, dass die elektrische Antriebseinheit als Einzelmotor oder als Tandemmotor mit zwei parallelen Motoren ausgebildet sein kann. In vorteilhafter Weise ergibt sich hierdurch die Möglichkeit der Vervielfachung der Antriebsleistung bei kleinem Bauraumbedarf. Besonders bevorzugt ist als elektrische Antriebseinheit ein Drehstromantrieb vorgesehen, z.B. eine Synchronmaschine, , insbesondere eine permanenterregte Maschine, die besonders kompakt baut bei gleichzeitig hoher Leistungsabgabe.

In einer Ausgestaltung der Erfindung kann mindestens eine Bremseinheit auf die mindestens eine Radsatzwelle wirken. Vorteilhaft kann der elektrische Antrieb als elektrische Bremse eingesetzt werden, der wirkt, bevor eine mechanische Bremse zum Einsatz kommt. Falls ausreichend Wärme abgeführt werden kann, kann im elektrischen Bremsbetrieb ein großer Teil der kinetischen Energie des Fahrzeugs abgebaut werden, bevor etwa die mechanische Bremse zum Einsatz kommt. In vorteilhafter Weise ergibt sich ein verschleißarmes Bremsen, wobei vorzugsweise die beim Bremsen entstehende Abwärme zum Heizen beispielsweise einer Fahrerkabine eines Zweiwegefahrzeugs nutzbar ist.

In einer weiteren Ausgestaltung der Erfindung ist die Bremseinheit als mindestens eine Feststellbremseinheit ausgeführt, welche im Stillstand der Radsatzwelle mittels Federspeicherprinzip klemmt. Ein Lösen der Feststellbremse erfolgt über eine Druckbeaufschlagung. Vorteilhaft kann die Bremseinheit als mindestens eine Scheibenbremse mit mindestens einem Bremsaufnahmeflansch, mindestens einer Bremsscheibe und mindestens einem Bremsbackenpaar ausgeführt sein, wobei der mindestens eine Bremsaufnahmeflansch auf der Radsatzwelle aufgepresst, die mindestens eine Bremsscheibe mit dem mindestens einen Bremsaufnahmeflansch fest verbunden und das mindestens eine Bremsbackenpaar fest mit dem Getriebegehäuse verbunden ist. Es ergibt sich ein kompakter und robuster Aufbau der Bremseinheit und der Schienenfahreinrichtung. Vorteilhaft kann die Bremseinheit so ausgeführt werden, dass ein ausreichender Freiraum zwischen Radsatzwelle und Schiene bleibt, insbesondere sind die Bremssättel außerhalb des Freiraums zwischen Radsatzwelle und Schiene angeordnet.

Die Erfindung ist nachfolgend beispielhaft, ohne Beschränkung der Allgemeinheit, anhand eines in den Zeichnungen dargestellten Ausführungsbeispieles näher erläutert.

Es zeigen:
- Fig. 1: eine perspektivische Darstellung einer erfindungsgemäßen Schie- nenfahreinrichtung;
- Fig. 2: eine Draufsicht auf die erfindungsgemäße Schienenfahreinrichtung mit Teilschnitten;
- Fig. 3: einen Schnitt durch eine Getriebeeinheit und eine Bremseinheit der erfindungsgemäßen Schienenfahreinrichtung;
- Fig. 4: eine Seitenansicht der Getriebeeinheit und der Bremseinheit der er- findungsgemäßen Schienenfahreinrichtung;
- Fig. 5: Details eines vorteilhaften Getriebes; und
- Fig. 6: eine beispielhafte Ausgestaltung eines Zweiwegefahrzeugs mit ab- gesenkter Schienenfahreinrichtung gemäß der Erfindung.

In den folgenden Figuren sind funktionell gleich wirkende Elemente jeweils mit gleichen Bezugszeichen beziffert.

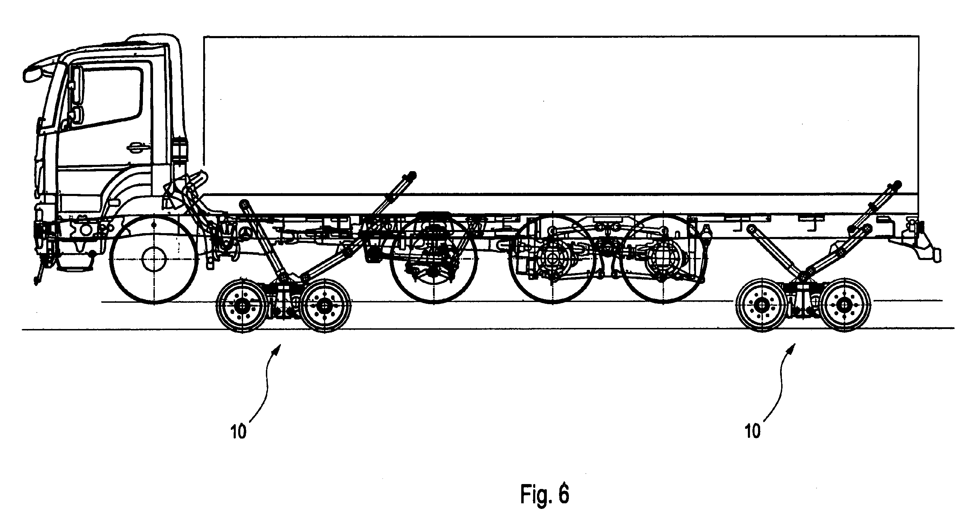

Im vorliegenden Ausführungsbeispiel ist gemäß Fig. 6 eine erfindungsgemäße Schienenfahreinrichtung für ein Zweiwegefahrzeug vorgesehen, das als Basisfahrzeug einen Lastkraftwagen aufweist. Häufig weist ein Zweiwegefahrzeug eine Schienenfahreinrichtung mit zwei vorzugsweise hydrostatisch anhebbaren und absenkbaren Fahrwerken auf, wovon ein Fahrwerk in einem vorderen Bereich und ein Fahrwerk in einem hinteren Bereich des Zweiwegefahrzeugs angeordnet ist. Beim Einsatz im Bahnbetrieb bzw. im Schienenbetrieb ist das Fahrwerk der Schieneneinrichtung abgesenkt. Soll das Zweiwegefahrzeug im Straßenbetrieb bzw. im Fahrbahnbetrieb eingesetzt werden, so wird das Fahrwerk der Schieneneinrichtung, wie in Fig. 6 dargestellt, angehoben.

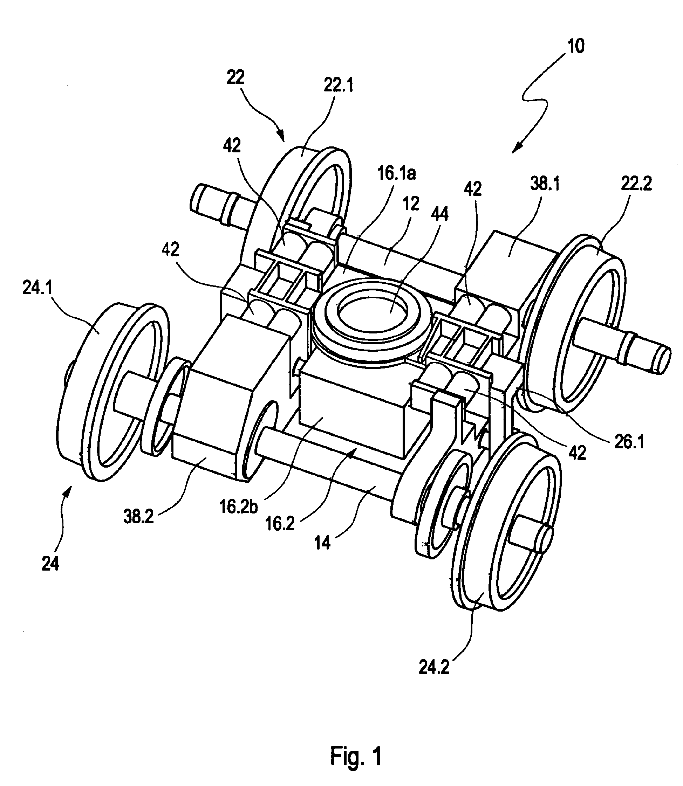

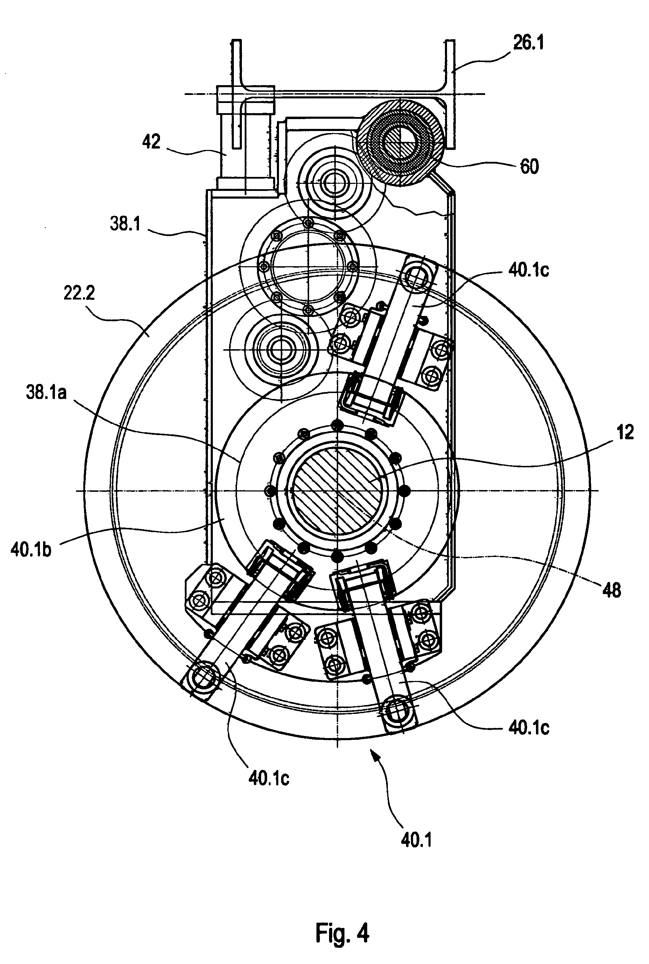

Wie in den Figuren 1 bis 4 gezeigt, weist das vorzugsweise über eine Drehgestellaufhängung 44 mit einem Fahrzeug verbundene Fahrwerk 10 der Schienenfahreinrichtung im vorliegenden Ausführungsbeispiel zwei Radsatzwellen 12, 14 mit jeweils einem Radsatz 22, 24 auf, wobei jeder Radsatz vorzugsweise zwei Spurräder 22.1, 22.2, 24.1, 24.2 umfasst. Die Radsätze 22, 24 sind in Radaufnahmen 18, 20 mit radialen Sitzen 32 auf den Radsatzwellen 12, 14 gelagert. Hierbei weisen die Radsatzwellen 12, 14 nach außen ragende Radsatzwellenstummel auf, die durch Kunststoffkappen schützbar sind. Vorzugsweise sind die Radsatzwellen 12, 14 aus einem hochvergüteten Stahl gefertigt. Die Radsatzwellen 12, 14 sind an einem Fahrwerkrahmen 26.1, 26.2, 26.3 der Schienenfahreinrichtung gelagert. Der Fahrwerkrahmen 26.1, 26.2, 26.3 umfasst einen Querträger 26.1 und zwei als Längslenker 26.2, 26.3 ausgeführte Längsträger, über welche die Radsatzwellen 12, 14 mit dem Querträger 26.1 verbunden sind. Zwischen den Radsatzwellen 12, 14 und dem Querträger 26.1 sind gemäß Fig. 1 und 4 Dämpfereinheiten 42 angeordnet, die vorzugsweise als Dämpfungsfedem ausgebildet sind. Die Dämpfereinheiten 42 federn das Fahrwerk 10 und somit das Fahrzeug gegenüber der Schienenbahn bzw. dem Gleis ab, indem durch Gleisfehler bedingte Stöße und Schwingungen aufgenommen und kompensiert werden und somit ein guter Fahrkomfort geschaffen wird, der Mensch und Material schont. Die Längsträger 26.2, 26.3 sind beidseitig an dem Querträger 26.1 angeordnet. Der vorzugsweise kastenförmige Querträger 26.1 weist eine Drehgestellaufhängung 44 auf und ist in Fahrtrichtung mittig zwischen den Radsatzwellen 12, 14 angeordnet. Die Radsatzwellen 12, 14 sind von einer elektrischen Antriebseinheit 16.1, 16.2 antreibbar.

Um eine baustellengerechte Spurweitenverstellung der Schienenfahreinrichtung mit einer schnellen Anpassung der Spurweiten der Radsätze 22, 24 zu ermöglichen, weist die Schienenfahreinrichtung erfindungsgemäß eine Spurweitenverstelleinheit 28 auf, die Radaufnahmen 18, 20 mit zylindrischen oder konischen Sitzen 32 zur Lagerung des Radsatzes 22, 24 umfasst.

Im vorliegenden Ausführungsbeispiel sind die Sitze 32 je nach einzustellender Spurweite auf den Aufnahmeflanschen 34 bzw. durch auf den Radsatzwellen 12, 14 befestigbare Adapter 36.1, 36.2 mit konischen Sitzen 32 sowie auf den Radsatzwellen 12, 14 zur Aufnahme der Adapter 36.1, 36.2 ausgebildet. Bevorzugt weisen die Sitze 32 auf den Aufnahmeflanschen 34, den Radsatzwellen 12, 14 und den Adaptern 36.1, 36.2 gemäß Fig. 1 einen kleinen Winkel von z.B. etwa 3° auf, entsprechend dem halben Öffnungswinkel des Konus. D.h. eine Längsachse 46 und eine abgeschrägte Lagerfläche der Sitze 32 auf den Aufnahmeflanschen 34, den Radsatzwellen 12, 14 und den Adaptern 36.1, 36.2 schließen einen Winkel a ein, welcher bevorzugt ein Winkelmaß von etwa 3° aufweist.

Vorzugsweise sind die Aufnahmeflansche 34 innerhalb der Spurräder 22.1, 22.2, 24.1, 24.2 auf den Radsatzwellen 12, 14 angeordnet. Die Aufnahmeflansche 34 selbst sind jeweils mit konischen Sitzen 30 über einen Kegelpressverband fest auf den Radsatzwellen 12, 14 befestigt. Die konischen Sitze 30 der Aufnahmeflansche 34 auf den Radsatzwellen 12, 14 weisen z.B. einen Winkel von 1,14° (halber Öffnungswinkel des Konus) auf, entsprechend einem Konus-Verhältnis von 1:50. Vorzugsweise wird der Kegelpressverband im kalten Zustand der Bauteile 12, 14, 34 durch Aufweiten der Nabe der Aufnahmeflansche 34 bevorzugt mit Hilfe von Glycerin oder einem anderen üblichen Montageöl hergestellt.

Die Adapter 36.1 (z.B. für Normalspur) und 36.2 (z.B. für Breitspur) bestehen jeweils aus einem Hohlzylinder mit einer der gewünschten Spurweite entsprechenden Länge und einer am freien Ende quer dazu angeordneten Adapter-Scheibe 36.3, 36.4, an der das jeweilige Spurrad 22.1, 22.2, 24.1, 24.2 befestigt werden kann. Die Adapter 36.1, 36.2 werden mit ihrem Hohlzylinder auf die Radsatzwellen 12, 14 aufgeschoben und stoßen am Aufnahmeflansch 34 an. Auf der Radsatzwelle 12, 14 ist für die jeweilige einzustellende Spurweite ein entsprechender zylindrischer oder konischer Sitz 32 vorgesehen. Das jeweilige Spurrad 22.1, 22.2, 24.1, 24.2 wird auf einen der Adapter-Scheibe 36.3, 36.4 vorgelagerten zylindrischen oder konischen Sitz 32 des Adapters 36.1, 36.2 geschoben und mit der Adapter-Scheibe 36.3, 36.4 z.B. verschraubt.

Die Spurweitenverstelleinheit 28 ermöglicht eine mechanische Spurweitenverstellung, so dass zumindest eine Umstellung der Spurweite des Radsatzes 22, 24 zwischen Schmalspur, Normalspur und Breitspur möglich ist. Hierfür umfasst die Spurweitenverstelleinheit 28 die Adapter 36.1 füreinen Normalspurbetrieb und die Adapter 36.2 für einen Breitspurbetrieb. Im Schmalspurbetrieb sitzen die Spurräder 22.1, 22.2, 24.1, 24.2 des Radsatzes 22, 24 direkt auf den Aufnahmeflanschen 34 der Radaufnahmen 18, 20. Im Normalbetrieb oder im Breitspurbetrieb sitzen die Spurräder 22.1, 22.2, 24.1, 24.2 des Radsatzes 22, 24 auf den jeweiligen Adaptern 36.1, 36.2, die auf den Aufnahmeflanschen 34 mittels zylindrischen oder konischen Sitzen befestigt sind.

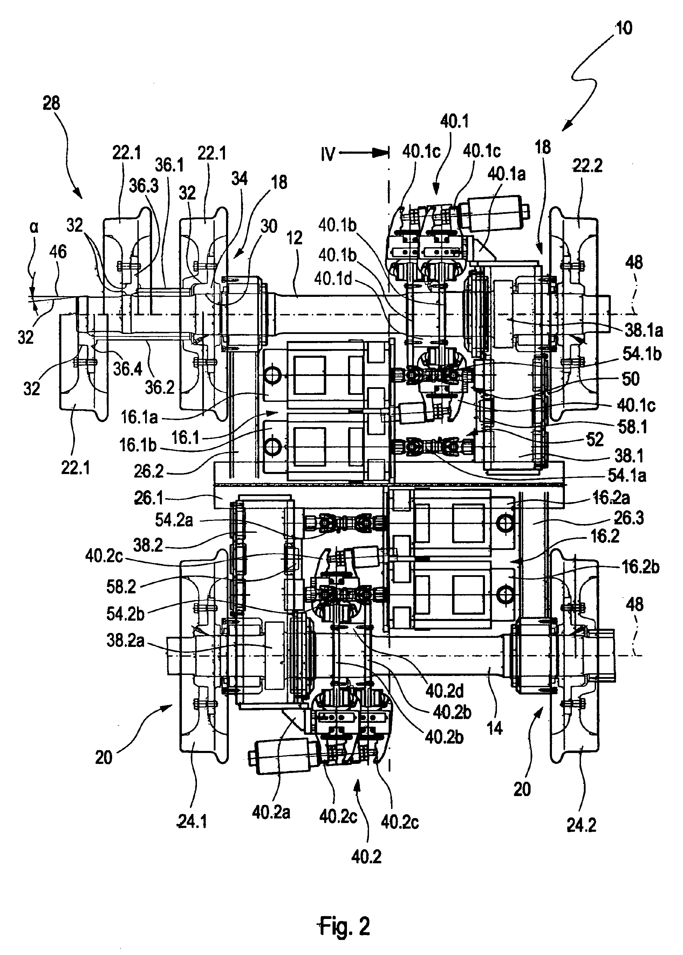

Eine hier nicht dargestellte, vorzugsweise als Dieselmotor ausgeführte Brennkraftmaschine des Zweiwegefahrzeugs speist einen ebenfalls nicht dargestellten Generator, vorzugsweise einen Drehstromgenerator, der Leistung für die elektrische Antriebseinheit 16.1, 16.2 zur Verfügung stellt. Über einen für diesen Einsatzfall konzipierten Frequenzumrichter wird ein Fahrstrom mit variabler Spannung und Frequenz erzeugt und der elektrischen Antriebseinheit 16.1, 16.2 bedarfsgerecht zugeführt. Die elektrische Antriebseinheit 16.1, 16.2 kann einen Einzelmotor oder einen Tandemmotor 16.1, 16.2 mit zwei parallelen Motoren 16.1a, 16.1b, 16.2a, 16.2b umfassen. Wie insbesondere in Fig. 2 ersichtlich, wird im vorliegenden Ausführungsbeispiel jede Radsatzwelle 12, 14 von einem zwei parallel zueinander angeordneten Motoren 16.1 a, 16.1b, 16.2a, 16.2b aufweisenden Tandemmotor 16.1, 16.2 z.B. über Gelenkwellen 54.1 a, 54.1b, 54.2a, 54.2b angetrieben. Im vorliegenden Ausführungsbeispiel handelt es sich bei den Motoren 16.1 a, 16.1b, 16.2a, 16.2b um einen Drehstromantrieb mit permanent erregten Synchronmotoren, die vorzugsweise bei kleinem Bauvolumen wassergekühlt und zur Schmutzabwehr gekapselt ausgeführt sind. Insbesondere können die Motoren 16.1a, 16.1b, 16.2a, 16.2b thermisch kontrollierbar ausgeführt sein, indem sie einen hier nicht sichtbaren Wärmetauscher aufweisen, der z.B. in einem gemeinsamen Kühlkreislauf für das Kühlwasser der Motoren 16.1 a, 16.1 b, 16.2a, 16.2b angeordnet ist.

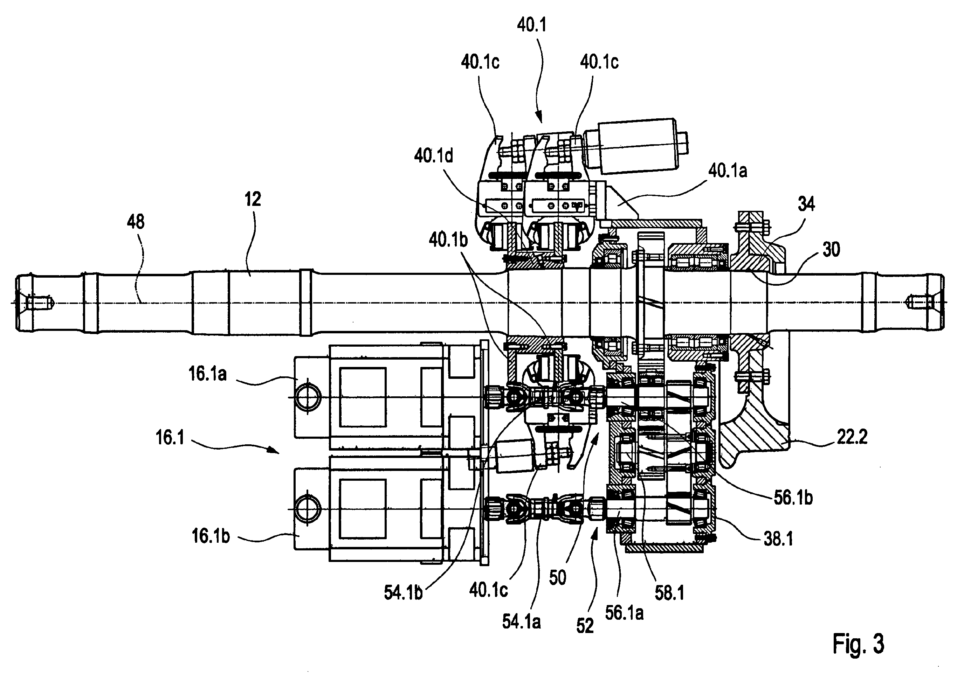

Das Drehmoment der elektrischen Antriebseinheit 16.1, 16.2 wird über eine Getriebeeinheit 38.1, 38.2 auf die Radsatzwellen 12, 14 übertragen, wobei die Getriebeeinheit 38.1, 38.2 gemäß Fig. 3 und 4 vorzugsweise als Stirnradgetriebeeinheit ausgebildet ist. Die Getriebeeinheit 38.1, 38.2 ist besonders kompakt gebaut und kann bei relativ geringer Breite einen kurzen Weg für den Kraftfluss zur Radsatzwelle 12, 14 aufweisen. Die tolerierbare Höhe der Getriebeeinheit 38.1, 38.2 wird dabei stark von dem notwendigen Freiraum oberhalb und unterhalb der Radsatzwelle 12, 14 beschränkt. Darüber hinaus setzt die geometrische Position des Aufnahmeflansches für die Spurbreite Schmalspur der tolerierbaren Breite der Getriebeeinheit 38.1, 38.2 eine harte Grenze.

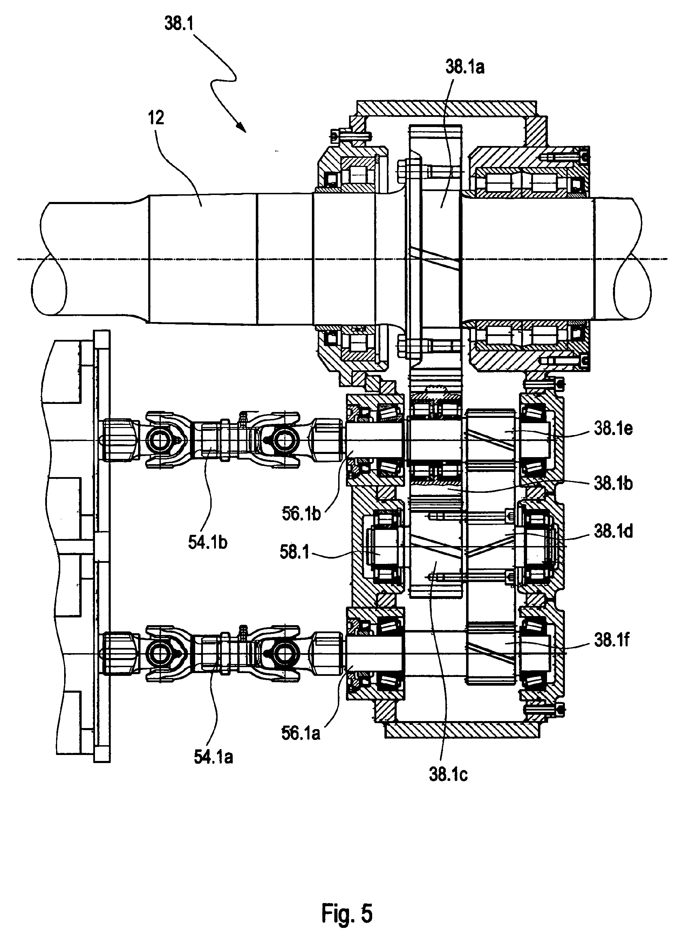

Fig. 5 zeigt ein Detail einer vorteilhaften Getriebeeinheit 38.1. Die Getriebeeinheit 38.1 umfasst sechs Getrieberäder 38.1a, 38.1b, 38.1c, 38.1d, 38.1e und 38.1f, die miteinander in Wirkverbindung stehen, wobei das Getrieberad 38.1f auf einer ersten Eingangswelle 56.1 a und die Getrieberäder 38.1e und 38.1 b auf einer zweiten Eingangswelle 56.1b angeordnet sind. Die drehbaren Eingangswellen 56.1 a und 56.1b verlaufen im Wesentlichen parallel zueinander. Zwischen den Eingangswellen 56.1a und 56.1b ist eine Vorgelegewelle 58.1 angeordnet, auf der die Getrieberäder 38.1d und 38.1c aufgenommen sind. Die Vorgelegewelle 58.1 verläuft im Wesentlichen parallel zu den Eingangswellen 56.1 a und 56.1b. Die beiden Getrieberäder 38.1f und 38.1 e sitzen jeweils fest auf der jeweiligen Eingangswelle 56.1 a oder 56.1b und stehen im Eingriff mit dem Getrieberad 38.1d, das fest auf der Vorgelegewelle 58.1 sitzt. Das Getrieberad 38.1c sitzt ebenfalls auf der Vorgelegewelle 58.1 und bildet mit dieser und somit mit dem Getrieberad 38.1d einen Verbund. Das Getrieberad 38.1c steht im Eingriff mit dem Getrieberad 38.1b, welches wiederum im Eingriff steht mit dem Getrieberad 38.1 a, das fest auf der Radsatzwelle 12 sitzt.

Die Eingangswellen 56.1 a und 56.1 b treiben die Getrieberäder 38.1f und 38.1e an, welche gleich schnell und in eine gleiche Richtung, z.B. im Uhrzeigersinn, drehen. Die Getrieberäder 38.1f und 38.1e treiben das zwischen ihnen angeordnete Getrieberad 38.1d an, welches in die entgegengesetzte Richtung, z.B. im Gegenuhrzeigersinn, dreht und das mit ihm einen Verbund bildende Getrieberad 38.1 c mitnimmt. Das Getrieberad 38.1c wiederum treibt das Getrieberad 38.1b an, welches in die Richtung, z.B. im Uhrzeigersinn, dreht. Das lose, d.h. drehbar, auf der Eingangswelle 56.1b sitzende Getrieberad 38.1 b treibt das fest auf der Radsatzwelle 12 sitzende Getrieberad 38.1 a an, welches in die Richtung, z.B. im Gegenuhrzeigersinn, dreht, wobei das Getrieberad 38.1b langsamer als die Eingangswelle 56.1b dreht. Durch den Drehsinn von 38.1e/38.1b und 38.1c subtrahieren sich die Drehzahlen, wodurch die Lager der Getrieberäder 38.1f, 38.1e, 38.1d, 38.1c, 38.1b und 38.1 a weniger belastet werden.

Das Getrieberad 38.1 a der Stirnradgetriebeeinheit 38.1 kann hierbei auf die Radsatzwelle 12 lösbar befestigt sein, z.B. angeschraubt. Es ist jedoch auch möglich, das Getrieberad 38.1 a der Stirnradgetriebeeinheit 38.1 mittels eines Kegelpressverbandes mit der Radsatzwelle 12 fest zu verbinden.

Gemäß Fig. 2, 3 und Fig. 5 liegen die Motoren 16.1b, 16.2a und die Motoren 16.1 a, 16.2b achsparallel zu der Achse 48 der Radsatzwellen 12, 14 und sind vertikal leicht versetzt. Im vorliegenden Ausführungsbeispiel umfasst die Getriebeeinheit zwei separate Getriebe 38.1 und 38.2 mit jeweils einem separaten Gehäuse. Ein Gehäuse der Getriebeeinheit 38.1 ist als Längslenker 26.3 des Fahrwerkrahmens ausgebildet. Im vorliegenden Ausführungsbeispiel weisen gemäß Fig. 2 und 3 die beiden Getriebe 38.1 und 38.2 jeweils zwei Anschlüsse 50, 52 für die beiden Motoren 16.1a, 16.1b, 16.2a, 16.2b des Tandemmotors 16.1, 16.2 auf. Das Getriebegehäuse 38.1 und 38.2 ist starr zwischen dem Querträger 26.1 und einer Radsatzwelle 12, 14 eingespannt. Hierdurch kann eines der Getriebegehäuse 38.1 gleichzeitig als Längslenker 26.3 fungieren, der im Betrieb der Schienenfahreinrichtung auftretende Kräfte an den Querträger 26.1 weitergibt. Die Getriebegehäuse 38.1 und 38.2 sind vorzugsweise über die Dämpfereinheiten 42 mit dem Querträger 26.1 verbunden. Unterhalb der Dämpfereinheiten 42 ist ein Gummilager 60 angeordnet, das Stöße in horizontaler Richtung aufnimmt und einen gewissen Freiraum für Vertikalbewegungen des Getriebegehäuses 38.1, 38.2 erlaubt.

Die Schienenfahreinrichtung weist gemäß Fig. 2 bis 4 eine Bremseinheit 40.1, 40.2 auf, die auf die Radsatzwellen 12, 14 wirkt. Die Bremseinheit 40.1, 40.2 ist als mindestens eine Feststellbremse ausgeführt, weiche im Stillstand der Radsatzwelle 12, 14 mittels Federspeicherprinzip klemmt. Ein Lösen der Feststellbremse 40.1, 40.2 erfolgt über eine Druckbeaufschlagung. Vorzugsweise ist die Bremseinheit 40.1, 40.2 als mindestens eine Scheibenbremse mit mindestens einem Bremsaufnahmeflansch 40.1a, 40.2a, mindestens einer Bremsscheibe 40.1b, 40.2b und mindestens einem Bremsbackenpaar 40.1c, 40.2c ausgeführt, wobei der Bremsaufnahmeflansch 40.1a, 40.2a auf der Radsatzwelle 12, 14 aufgepresst, die Bremsscheibe 40.1b, 40.2b mit dem Bremsaufnahmeflansch 40.1a, 40.2a fest verbunden und das Bremsbackenpaar 40.1c, 40.2c fest mit dem Getriebegehäuse 38.1, 38.2 verbunden ist. Günstigerweise sind die Bremseinheiten 40.1, 40.2 so ausgebildet, dass Komponenten der Bremseinheiten 40.1, 40.2 wie etwa Bremssättel 40.1d, 40.2d an denen die Bremsbackenpaare 40.1c, 40.2c angeordnet sind, außerhalb eines Freiraums zwischen Radsatzwelle 12, 14 und, im abgesenkten Zustand, der Schiene angeordnet sind.

Selbstverständlich sind auch andere einem Fachmann als sinnvoll erscheinende Ausführungsformen der Bremseinheit denkbar. Im vorliegenden Ausführungsbeispiel sind zwei Scheibenbremseneinheiten 40.1, 40.2 vorgesehen, die jeweils auf eine Radsatzwelle 12, 14 wirken. Jede Scheibenbremseneinheit 40.1, 40.2 umfasst drei Scheibenbremsen, die um die jeweilige Radsatzwelle 12, 14 in einem Abstand voneinander angeordnet sind Vorzugsweise ist eine hydraulisch wirkende Scheibenbremse vorgesehen, die elektrisch, mechanisch oder über Druckumsetzer pneumatisch betätigt wird. Je nach Antriebsgröße sind eine oder mehrere Bremsscheiben 40.1b, 40.2b pro Radsatzwelle 12, 14 vorgesehen, wobei die Bremsscheiben 40.1b, 40.2b abhängig vom Bauraum direkt auf der Radsatzwelle 12, 14 angeordnet oder als Radbremsscheiben ausgebildet sind.

## Patentansprüche

1. Schienenfahreinrichtung für ein Fahrzeug, mit mindestens einem anhebbaren und absenkbaren Fahrwerk (10), das mindestens eine Radsatzwelle (12, 14), welche von einer Antriebseinheit (16.1, 16.2) antreibbar ist, einen in Radaufnahmen (18, 20) auf der mindestens einen Radsatwelle (12, 14) gelagerten Radsatz (22, 24) und einen Fahrwerkrahmen (26.1, 26.2, 26.3), an welchem die mindestens eine Radsatzwelle (12, 14) gelagert ist, umfasst, **dadurch gekennzeichnet, dass** zwischen der Antriebseinheit (16.1, 16.2) und der Radsatzwelle (12, 14) eine Getriebeeinheit (38.1, 38.2) vorgesehen ist, bei der ein Antriebsrad (38.1b) zum Antreiben der Radsatzwelle (12, 14) auf einer drehbaren Welle (56.1b) angeordnet ist.

2. Schienenfahreinrichtung nach Anspruch 1, **dadurch gekennzeichnet, dass** das Antriebsrad (38.1b) ein Zahnrad in Relativlagerung ist.

3. Schienenfahreinrichtung nach Anspruch 1 oder 2, **dadurch gekennzeichnet, dass** die Antriebseinheit (16.1, 16.2) einen Drehstromantrieb umfasst.

4. Schienenfahreinrichtung nach einem der vorhergehenden Ansprüche, **gekennzeichnet durch** eine Spurweitenverstelleinheit (28) zur Verstellung mindestens einer Spurweite des Radsatzes (22, 24), welche Radaufnahmen (18, 20) zylindrische oder konische Sitze (32) zur Lagerung des Radsatzes (22,24) umfassen.

5. Schienenfahreinrichtung nach Anspruch 4, **dadurch gekennzeichnet, dass** die zylindrischen oder konischen Sitze (32) zur Aufnahme der Spurräder (22.1, 22.2, 24.1, 24.2) auf Aufnahmeflanschen (34) und/oder auf Adaptern (36.1, 36.2), die auf den Radsatzwellen (12, 14) befestigbar sind, ausgebildet sind.

6. Schienenfahreinrichtung nach Anspruch 4 oder 5, **dadurch gekennzeichnet, dass** der Konus der konischen Sitze (32) einen halben Öffnungswinkel zwischen 1° bis 5°, vorzugsweise etwa 3°, aufweist.

7. Schienenfahreinrichtung nach einem der vorhergehenden Ansprüche 5 oder 6, **dadurch gekennzeichnet, dass** die Aufnahmeflansche (34) über einen Kegelpressverband fest auf einem konischen Sitz (30) mit der mindestens einen Radsatzwelle (12, 14) verbunden sind.

8. Schienenfahreinrichtung nach einem der vorhergehenden Ansprüche 4-7, **dadurch gekennzeichnet, dass** die Spurweitenverstelleinheit (28) zumindest eine Umstellung der Spurweite des Radsatzes (22, 24) zwischen Schmalspur, Normalspur und Breitspur ermöglicht.

9. Schienenfahreinrichtung nach einem der vorhergehenden Ansprüche, **dadurch gekennzeichnet, dass** der Fahrwerkrahmen (26.1, 26.2, 26.3) einen Querträger (26.1) und zwei Längslenker (26.2, 26.3) umfasst, über welche die mindestens eine Radsatzwelle (12, 14) mit dem Querträger (26.1) verbunden ist.

10. Schienenfahreinrichtung nach Anspruch 9, **dadurch gekennzeichnet, dass** ein Gehäuse der Getriebeeinheit (38.1) als Längslenker (26.3) ausgebildet ist.

11. Schienenfahreinrichtung nach einem der vorhergehenden Ansprüche, **dadurch gekennzeichnet, dass** die elektrische Antriebseinheit (16.1, 16.2) mit einem Generator in Verbindung steht, der von einer Brennkraftmaschine des Fahrzeugs gespeist wird, und/oder durch mindestens einen elektrischen Energiespeicher und/oder durch einen oder mehrere Stromabnehmer aus einem Versorgungsnetz und/oder durch eine induktive Stromversorgung versorgbar ist.

12. Schienenfahreinrichtung nach einem der vorhergehenden Ansprüche, **dadurch gekennzeichnet, dass** die elektrische Antriebseinheit als Einzelmotor oder als Tandemmotor (16.1, 16.2) mit zwei parallelen Motoren (16.1a, 16.1 b, 16.2a, 16.2b) ausgebildet ist.

13. Schienenfahreinrichtung nach einem der vorhergehenden Ansprüche, **gekennzeichnet durch** mindestens eine Bremseinheit (40.1, 40.2), die auf die mindestens eine Radsatzwelle (12, 14) wirkt.

14. Schienenfahreinrichtung nach Anspruch 15, **dadurch gekennzeichnet, dass** die Bremseinheit (40.1, 40.2) als mindestens eine Feststellbremseinheit ausgeführt ist, welche im Stillstand der Radsatzwelle (12, 14) mittels Federspeicherprinzip klemmt.

15. Fahrzeug, insbesondere Zweiwegefahrzeug, mit mindestens einer Schienenfahreinrichtung nach einem der Ansprüche 1 bis 14.

## Claims

1. Railborne device for a vehicle with at least one lifting and lowering bogie (10) which comprises at least one wheelset shaft (12, 14) driven by a drive unit (16.1, 16.2), a wheelset (22, 24) mounted on bearings in wheel seats (18, 20) on at least one of the wheelset shafts (12, 14) and a bogie frame (26.1, 26.2, 26.3) on which at least one of the wheelset shafts (12, 14) is mounted on bearings, **characterised in that** a gear unit (38.1, 38.2) is provided between the drive unit (16.1, 16.2) and the wheelset shaft (12, 14), on which a gear unit drive wheel (38.1 b) for driving the wheelset shaft (12, 14) is arranged on a rotating shaft (56.1b).

2. Railborne device according to claim 1, **characterised in that** the drive wheel (38.1b) is a gear wheel mounted on relative bearings.

3. Railborne device according to claim 1 or claim 2, **characterised in that** the drive unit (16.1, 16.2) comprises a rotary-current drive system.

4. Railborne device according to any of the preceding claims, **characterised by** a gauge-adjusting unit (28) for adjusting at least one gauge of the wheelset (22, 24), which wheel seats (18, 20) comprise cylindrical or tapered seats (32) for mounting the wheelset (22, 24).

5. Railborne device according to claim 4, **characterised in that** the cylindrical or tapered seats (32) for receiving the track wheels (22.1, 22.2, 24.1, 24.2) are formed on seating flanges (34) and/or adapters (36.1, 36.2) which can be attached to the wheelset shafts (12, 14).

6. Railborne device according to claim 4 or claim 5, **characterised in that** the taper of the tapered seats (32) has a semi angle of between 1° and 5°, preferably approximately 3°.

7. Railborne device according to either of the preceding claims 5 or 6, **characterised in that** the seating flanges (34) are permanently attached via a tapered press fit on a tapered seat (30) to at least one of the wheelset shafts (12,14).

8. Railborne device according to any of the preceding claims 4-7, **characterised in that** the gauge-adjusting unit (28) permits the gauge of the wheelset (22, 24) to be adjusted at least between narrow gauge, standard gauge and wide gauge.

9. Railborne device according to any of the preceding claims, **characterised in that** the bogie frame (26.1, 26.2, 26.3) has a transverse bar (26.1) and two longitudinal control arms (26.2, 26.3) by means of which at least one of the wheelset shafts (12, 14) is connected to the transverse bar (26.1).

10. Railborne device according to claim 9, **characterised in that** a housing of the gear unit (38.1) is formed as a longitudinal control arm (26.3).

11. Railborne device according to any of the preceding claims, **characterised in that** the electrical drive unit (16.1, 16.2) is connected to a generator which is powered by an internal-combustion engine of the vehicle and/or is capable of being supplied by at least one electrical energy storage device and/or by one or more current collectors from a supply grid and/or by an inductive power supply.

12. Railborne device according to any of the preceding claims, **characterised in that** the electrical drive unit is designed as a single motor or as a tandem motor (16.1, 16.2) with two motors (16.1 a, 16.1 b, 16.2a, 16.2b) in parallel operation.

13. Railborne device according to any of the preceding claims, **characterised by** at least one brake unit (40.1, 40.2) acting on at least one of the wheelset shafts (12, 14).

14. Railborne device according to claim 15, **characterised in that** the brake unit (40.1, 40.2) is designed as at least one locking-type brake which locks the wheelset shaft (12, 14) in the stationary state by the means of the spring-loading principle.

15. Vehicle, preferably a railroad vehicle with at least one railborne device according to any of the claims from 1 to 14.

## Revendications

1. Équipement de roulement ferroviaire pour un véhicule, comprenant au moins un bogie (10) relevable et abaissable, bogie qui inclut au moins un arbre d'essieu (12, 14) pouvant être entraîné par une unité de traction (16.1, 16.2), un jeu de roues (22, 24) en appui dans des logements de roue (18, 20) au moins sur l'un des arbres d'essieu (12, 14) et un châssis (26.1, 26.2, 26.3) de bogie contre lequel est en appui au moins un arbre d'essieu (12, 14), **caractérisé en ce qu'**entre l'unité de traction (16.1, 16.2) et l'arbre d'essieu (12, 14) est prévue une unité à réducteur (38.1, 38.2) sur laquelle une roue de traction (38.1b) sert à entraîner l'arbre d'essieu (12, 14) sur un arbre rotatif (56.1b).

2. Équipement de roulement ferroviaire selon la revendication 1, **caractérisé en ce que** la roue motrice (38.1 b) est une roue dentée sur palier relatif.

3. Équipement de roulement ferroviaire selon la revendication 1 ou 2, **caractérisé en ce que** l'unité de traction (16.1, 16.2) comprend un moteur à courant triphasé.

4. Équipement de roulement ferroviaire selon l'une des revendications précédentes, **caractérisé par** une unité (28) modificatrice d'écartement, servant à modifier au moins un écartement du jeu de roues (22, 24), dont les logements (18, 20) comprennent des sièges (32) cylindriques ou coniques où prend appui le jeu de roues (22, 24).

5. Équipement de roulement ferroviaire selon la revendication 4, **caractérisé en ce que** les sièges (32) cylindriques ou coniques recevant les roues à boudin (22.1, 22.2, 24.1, 24.2) sont configurés sur les flasques réceptacles (34) et/ou sur des adaptateurs (36.1, 36.2) pouvant être fixés sur les arbres d'essieux (12, 14).

6. Équipement de roulement ferroviaire selon la revendication 4 ou 5, **caractérisé en ce que** le cône des sièges coniques (32) présente un demi-angle d'ouverture compris entre 1 et 5°, de préférence de 3° environ.

7. Équipement de roulement ferroviaire selon l'une des revendications précédentes 5 ou 6, **caractérisé en ce que** les flasques réceptacles (34) sont reliés, via un joint serré conique sur un siège conique (30), à au moins un arbre d'essieu (12, 14).

8. Équipement de roulement ferroviaire selon l'une des revendications précédentes 4 à 7, **caractérisé en ce que** l'unité (28) modificatrice d'écartement permet au moins de convertir l'écartement du jeu de roues (22, 24) sur une voie étroite, une voie normale et une voie large.

9. Équipement de roulement ferroviaire selon l'une des revendications précédentes, **caractérisé en ce que** le châssis (26.1, 26.2, 26.3) du bogie comprend un support transversal (26.1) et deux guidons longitudinaux (26.2, 26.3) via lesquels au moins un arbre d'essieu (12, 14) est relié au support transversal (26.1).

10. Équipement de roulement ferroviaire selon la revendication 9, **caractérisé en ce qu'**un carter de l'unité à réducteur (38.1) est configuré comme guidon longitudinal (26.3).

11. Équipement de roulement ferroviaire selon l'une des revendications précédentes, **caractérisé en ce que** l'unité de traction (16.1, 16.2) électrique se trouve en liaison avec un générateur alimenté par un moteur à combustion interne du véhicule, et/ou alimentablé par au moins un accumulateur d'énergie et/ou un ou plusieurs pantographes depuis un réseau d'alimentation et/ou par alimentation électrique inductive.

12. Équipement de roulement ferroviaire selon l'une des revendications précédentes, **caractérisé en ce que** l'unité de traction électrique est configurée en forme de moteur individuel ou de moteur en tandem (16.1, 16.2) avec deux moteurs parallèles (16.1a, 16.1 b, 16.2a, 16.2b).

13. Équipement de roulement ferroviaire selon l'une des revendications précédentes, **caractérisé par** au moins une unité de freinage (40.1, 40.2) qui agit sur au moins un arbre d'essieu (12, 14).

14. Équipement de roulement ferroviaire selon la revendication 15, **caractérisé en ce que** l'unité de freinage (40.1, 40.2) est réalisée sous la forme d'au moins une unité à frein de stationnement laquelle, lorsque l'arbre d'essieu (12, 14) est immobile, agit selon le principe d'accumulation de la force d'un ressort.

15. Véhicule, notamment véhicule bimodal rail/route comportant au moins un équipement de roulement ferroviaire selon l'une des revendications 1 à 14.
